# EUROPEAN PATENT SPECIFICATION

(11) **EP 0 985 940 B1**
(45) Date of publication and mention of the grant of the patent: **06.04.2005**
(21) Application number: 98203009.0
(22) Date of filing: 09.09.1998
(51) Int. Cl.: G01T 1/29

(54) **Optical scanning apparatus**
Optisches Abtastgerät
Dispositif de balayage optique

(43) Date of publication of application: 15.03.2000
(73) Proprietor: AGFA-GEVAERT, 2640 Mortsel (BE)
(72) Inventor: Exelmans, Walter, 2640 Mortsel (BE)

(56) References cited:
- EP-A- 0 296 365
- US-A- 4 882 488
- US-A- 4 922 101

## Description

### FIELD OF THE INVENTION

The present invention relates to an optical scanning apparatus, more specifically to an optical scanning apparatus for scanning photostimulable phosphor screens.

### BACKGROUND OF THE INVENTION

Systems for scanning photostimulable phosphor screens have been known for a long time. Such scanning systems generally comprise a light source such as a laser for emitting light to stimulate the photostimulable phosphor screen, means for deflecting light emitted by the light source and for directing this light onto the photostimulable phosphor screen.

Suitable deflecting means are a galvanometric deflection unit or a polygon mirror or the like. Light emitted by the light source is deflected by the light deflecting means into a first or fast scan direction while the phosphor screen is transported into a so-called slow scan direction perpendicular to the fast scan direction.

The apparatus further comprises means for detecting image-wise modulated light that is emitted by the photostimulable phosphor screen upon stimulation and means for guiding the image-wise modulated light, onto the light detector. The light detector is e.g. a photomultiplier.

Although scanning systems of the above-named kind function very well, they also have some drawbacks.

The optical components used for deflecting the scanning beam, such as a galvanometric deflection unit, are expensive.

Furthermore, in order to obtain adequately accurate and sharp image detection suitable optics, such as a F-thèta lens, have to be provided in between the light source and the phosphor screen that is scanned. These optical components are also expensive. In addition they impose certain dimensional constraints to the scanning apparatus.

For example, the depth of focus required to obtain sharp image detection demands for the selection of certain lens types which in their turn have an influence on the distance required between the lens and photostimulable phosphor screen and consequentially on the dimensions of the entire apparatus.

The light guiding means is commonly implemented in the form of a bundle of optical fibres. At the light input face of the light guide the optical fibres are commonly arranged in a line which extends along a scanning line on the surface of the photostimulable phosphor screen and at the light output side the fibres are bundled so that the light output face matches with the light input window of a photomultiplier. The light guide may occupy a lot of space in the apparatus. Moreover, it may be a cause of non-uniform light detection which in its turn might ask for appropriate correction.

The light deflection means itself may also constitute a cause of non-uniform image detection. The light deflecting means needs to be very accurate, it is a very sensitive and expensive component of the scanning apparatus.

For several applications, among which dental applications, compact, small size and less expensive yet very reliable scanning devices are demanded.

A solution to the above-mentioned problems can be provided by a scanning system which does not need light deflection means, nor light guiding means of the kind used in the above-described scanning apparatus. Such a system has been described in WO 94/27167.

In the scanning system described in this application a line scan is obtained by a rotating movement of the scanning spot. The system comprises a plurality of lenses (in WO 94/27167 referred to as reading heads) which are mounted on a supporting disc. The supporting disc is rotatable around an axis of rotation. A light-source is mounted independent of the supporting disc and directs light through an optical beam switching device and through prisms into the lens(es).

Reading heads are operational in turn over a given segment of each revolution of the support. They execute scans of approximately circular form or of a concave part-cylinder form. The reading head support performs a translational movement relative to image-bearing subject to be read.

Light emitted by the subject retraces the path of the scanning light beam but is separated from the incoming light beam by means of a beam splitter. The emitted light can e.g. be detected by a photomultiplier.

In the described embodiment of a scanning system the light-source as well as the light detecting means are stationary. Complex optical means are still required to direct light emitted by the light-source onto the image-bearing subject.

### OBJECTS OF THE INVENTION

It is an object of the present invention to provide an optical scanning apparatus that is compact, simple and reliable.

Further objects will become apparent from the description hereafter.

### SUMMARY OF THE INVENTION

The above mentioned objects are realised by an optical scanning apparatus comprising
- a scanning assembly having at least one light source (2) and at least one light detecting means (3), the light source and the light detecting means being arranged so that light emitted by the light source is capable of impinging on an object (1) to be scanned and that light modulated by a scanned object is capable of impinging on the light detecting means,
- means (7) capable of displacing an object to be scanned and said scanning assembly relative to eachother in a first direction, characterised in that at least one of said light source and said light detecting means is arranged to rotate around an axis of rotation (5) perpendicular to said first direction.

In the scanning apparatus of the present invention no complex and expensive optical means are required to direct light towards the object to be scanned or towards the light detector.

The apparatus differs from the prior art apparatus disclosed in WO 94/27167 in that the light source and the light detecting means are not stationary, at least one of them performs a rotating movement relative to the object to be scanned.

In a preferred embodiment a base plate having at least one location through which light emitted by the light source impinges onto the object to be scanned and through which light modulated by the scanned object impinges onto the light detecting means, is mounted so as perform the same rotational movement as the scanning assembly or at least one of the light source and the light detecting means.

At least one of the light source and the light detecting means is mounted in a fixed position onto said plate so as to rotate with the plate. It is most convenient that both the light-source as well as the light detecting means are mounted on the rotating plate in a position which is optimal for detection of the emitted light.

The use of such a base plate is preferred because it is a mechanically stable embodiment. The base plate can furthermore be provided with conducting strips such as copper strips which may be used for contactless energy transfer (e.g. magnetic energy transfer) e.g. of the energy required for energising the photomultiplier.

The apparatus according to the present invention is advantageous in that a number of optical components which were necessary in the prior art embodiment to direct the light emitted by a stationary light source onto the object and for directing light emitted by the object upon stimulation towards the light detecting means, can be avoided.

No shading correction is required since the relative position of light source and scanned pixel is always the same.

Collection efficiency is very high since the light source and the light detecting means can be positioned optimally and no additional optics are provided which might deteriorate the light collection efficiency.

The device of the present invention is less complex than the scanning apparatus described in the introductory part of the description. Less adjustments will be required. The apparatus will be less sensitive to vibrations. Consequentially the device will be more reliable and less expensive.

Furthermore, because of the omission of the above described optical components, the dimensional constraints imposed i.a. by the use of these components no longer apply and consequentially the apparatus can be made more compact.

For example a galvanometer deflection unit or the like, which is an expensive component that requires very accurate adjustment, can be omitted. Also other light directing means such as semitransparent mirrors which direct light emitted by the light source towards the object to be scanned and which direct light emitted by the scanned object towards the detector can be omitted. Also light directing and focusing optical fibres or the like which were often used in prior art devices are no longer necessary.

The object to be scanned may be a photostimulable phosphor screen, a photographic film etc.

Line scan can be obtained by rotation of the plate together with the light-source and the light detecting means while frame scan can be obtained by relative mutual translation of the object to be scanned and the base plate.

Preferably the relative movement of the scanning assembly and the object to be scanned is obtained by moving the screen relative to a stationary scanning assembly.

This embodiment is preferred because this embodiment suffers the least from occasional vibrations during movement which may have a negative influence on the accuracy of the read-out.

It is possible to provide a plurality of light sources, for example 2, and a plurality of detectors so as to speed up the scanning of the entire object.

Further advantages and embodiments of the present invention will become apparent from the following description and drawings.

### BRIEF DESCRIPTION OF THE DRAWINGS

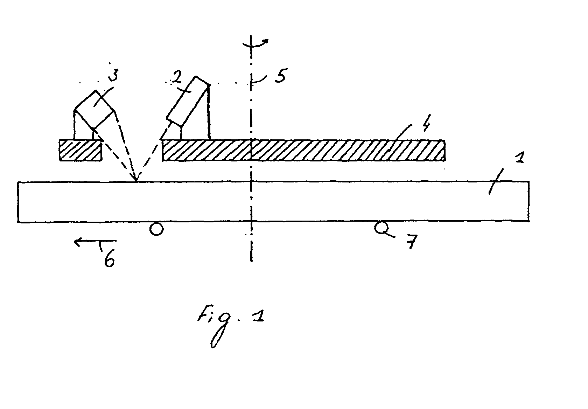

**Fig. 1** shows an optical scanning apparatus according to the present invention.

### DETAILED DESCRIPTION OF THE INVENTION

While the present invention will hereinafter be described in connection with a preferred embodiment thereof, it will be understood that it is not intended to limit the invention to this embodiment. Neither is the invention meant to be limited to the described specific embodiment of the scanned object being a photostimulable phosphor screen.

The optical scanning apparatus shown in figure 1 comprises a scanning assembly comprising a light-source 2 and a light-detecting means 3 mounted in a fixed position on a supporting disc 4, which is rotatably mounted around axis 5.
Disc 4 has a hole. Light-source 2 is arranged so that the light emitted by it is directed through the hole onto the photostimulable phosphor screen 1 to be scanned. Light source 2 is a laser.
Detection means 3 comprise a photomultiplier, preferably a small size photomultiplier, such as a photomultiplier tube of the R5600 U series of Hamamatsu. Detection means 3 is mounted on supporting disc 4 so that the light emitted by the photostimulable phosphor screen upon stimulation can impinge onto the detection means.

During scanning operation disc 4 rotates around axis 5 so that a line scan of substantially circular form is obtained.
Meanwhile the photostimulable phosphor screen is transported past the base plate in the direction of arrow 6. Suitable transport means for displacing the photostimulable phosphor screen, such as driven rollers, are provided (not shown).

Electronics computation means can be are provided to convert the co-ordinates of the detected pixel values from polar co-ordinates defined relative to the position of the axis of rotation of the disc towards a Cartesian co-ordinate system.

In this embodiment a single hole is provided in the disc and a single light source and photomultiplier is mounted on the disc.
It will be clear to the man skilled in the art that more than one, for example two holes may be provided. Two or more such combinations of light-source and light emitting means are then provided to direct stimulating light through the holes and to detect image-wise modulated light emitted by the phosphor upon stimulation.
In this way the time required to scan the photostimulable phosphor screen can be decreased.

## Claims

1. An optical scanning apparatus comprising
- a scanning assembly having at least one light source (2) and at least one light detecting means (3), the light source and the light detecting means being arranged so that light emitted by the light source is capable of impinging on an object (1) to be scanned and that light modulated by a scanned object is capable of impinging on the light detecting means,
- means (7) capable of displacing an object to be scanned and said scanning assembly relative to eachother in a first direction, **characterised in that** at least one of said light source and said light detecting means is arranged to rotate around an axis of rotation (5) perpendicular to said first direction.

2. An optical scanning apparatus according to claim 1 comprising a a base plate (4) having at least one location through which light emitted by said light source is capable of impinging onto the object to be scanned and through which light modulated by a scanned object is capable of impinging on said light detecting means (3), said base plate being arranged so as to make the same rotational movement as the light source or the light detecting means around said axis of rotation (5).

3. An optical scanning apparatus according to claim 2 wherein at least one of said light-source (2) and said light detecting means (3) is mounted on said rotating base plate (4).

4. An optical scanning apparatus according to claim 3 wherein both the light source and the light detecting means are mounted on said rotating base plate (4).

5. An optical scanning apparatus according to any of claims 2 to 4 wherein said rotating base plate (4) is a disc.

6. An optical scanning apparatus according to any of the preceding claims wherein said object is displaced relative to said scanning assembly.

7. Use of an optical scanning apparatus according to any of the preceding claims for scanning an object.

8. Use of an optical scanning apparatus according to claim 7 wherein said object is a photostimulable phosphor screen.

## Patentansprüche

1. Optische Abtastvorrichtung allerdings bestehend aus
- einer Abtastanordnung mit wenigstens einer Lichtquelle (2) und wenigstens einem Lichterfassungsmittel (3), wobei die Lichtquelle und das Lichterfassungsmittel derart angeordnet wurden, dass von der Lichtquelle ausgestrahltes Licht dazu befähigt ist, auf einen abzutastenden Gegenstand (1) aufzutreffen und dass von einem abgetasteten Gegenstand moduliertes Licht dazu befähigt ist, auf das Lichterfassungsmittel aufzutreffen,
- Mitteln (7), die dazu befähigt sind, einen abzutastenden Gegenstand und die Abtastanordnung gegenseitig in einer ersten Richtung zu verschieben,
**dadurch gekennzeichnet, dass** die Lichtquelle und/oder das Lichterfassungsmittel derart angeordnet wurde(n), dass sie um eine senkrecht zu der ersten Richtung stehende Drehachse (5) drehen.

2. Optische Abtastvorrichtung nach Anspruch 1, allerdings bestehend aus einer Grundplatte (4) mit wenigstens einer Stelle, durch die von der Lichtquelle ausgestrahltes Licht auf den abzutastenden Gegenstand auftreffen kann, und durch die von einem abgetasteten Gegenstand moduliertes Licht auf das Lichterfassungsmittel (3) auftreffen kann, wobei die Grundplatte derart angeordnet wurde, dass sie die gleiche Drehbewegung um die Drehachse (5) macht als die Lichtquelle oder das Lichterfassungsmittel.

3. Optische Abtastvorrichtung nach Anspruch 2, **dadurch gekennzeichnet, dass** die Lichtquelle (2) und/oder das Lichterfassungsmittel (3) an der drehenden Grundplatte (4) angebracht wurde(n).

4. Optische Abtastvorrichtung nach Anspruch 3, **dadurch gekennzeichnet, dass** sowohl die Lichtquelle wie auch das Lichterfassungsmittel an der drehenden Grundplatte (4) angebracht wurden.

5. Optische Abtastvorrichtung nach einem der vorstehenden Ansprüche 2 bis 4, **dadurch gekennzeichnet, dass** es sich bei der drehenden Grundplatte (4) um eine Scheibe handelt.

6. Optische Abtastvorrichtung nach einem der vorstehenden Ansprüche, **dadurch gekennzeichnet, dass** der Gegenstand der Abtastanordnung gegenüber verschoben wird.

7. Verwendung einer optischen Abtastvorrichtung nach einem der vorstehenden Ansprüche zum Abtasten eines Gegenstands.

8. Verwendung einer optischen Abtastvorrichtung nach Anspruch 7, **dadurch gekennzeichnet, dass** es sich beim Gegenstand um eine Speicherleuchtstofffolie handelt.

## Revendications

1. Dispositif de balayage optique englobant
- un ensemble de balayage possédant au moins une source de lumière (2) et au moins un moyen de détection de lumière (3), la source de lumière et le moyen de détection de lumière étant agencés de façon que la lumière émise par la source de lumière soit apte à atteindre un objet (1) à balayer et que la lumière modulée par un objet balayé soit apte à atteindre le moyen de détection de lumière,
- des moyens (7) pouvant déplacer un objet à balayer et ledit ensemble de balayage l'un par rapport à l'autre dans une première direction,
**caractérisé en ce que** ladite source de lumière et/ou ledit moyen de détection de lumière est/sont agencés pour tourner autour d'une axe de rotation (5) perpendiculaire à ladite première direction.

2. Dispositif de balayage optique selon la revendication 1 englobant une plaque de montage (4) possédant au moins un emplacement à travers lequel la lumière émise par ladite source de lumière peut atteindre l'objet à balayer et à travers lequel la lumière modulée par un objet balayé peut atteindre ledit moyen de détection de lumière (3), l'agencement de ladite plaque de montage étant tel qu'elle fait le même mouvement de rotation que la source de lumière ou le moyen de détection de lumière autour de ladite axe de rotation (5).

3. Dispositif de balayage optique selon la revendication 2,
**caractérisé en ce que** ladite source de lumière (2) et/ou ledit moyen de détection de lumière (3) est/sont monté(s) sur ladite plaque de montage tournante (4).

4. Dispositif de balayage optique selon la revendication 3,
**caractérisé en ce que** la source de lumière aussi bien que le moyen de détection de lumière sont montés sur ladite plaque de montage tournante (4).

5. Dispositif de balayage optique selon l'une quelconque des revendications 2 à 4, **caractérisé en ce que** ladite plaque de montage tournante (4) est un disque.

6. Dispositif de balayage optique selon l'une quelconque des revendications précédentes, **caractérisé en ce que** ledit objet est déplacé par rapport audit ensemble de balayage.

7. Utilisation d'un dispositif de balayage optique selon l'une quelconque des revendications précédentes pour balayer un objet.

8. Utilisation d'un dispositif de balayage optique selon la revendication 7, **caractérisée en ce que** ledit objet est un écran à luminophore photostimulable.
